Europäisches Patentamt

European Patent Office

Office européen des brevets

(19)

(11) EP 0 575 277 B1

(12) FASCICULE DE BREVET EUROPEEN

(45) Date de publication et mention
de la délivrance du brevet:
**14.05.1997 Bulletin 1997/20**

(51) Int Cl.⁶: **F16B 33/00**, C04B 35/80

(21) Numéro de dépôt: **93450003.4**

(22) Date de dépôt: **15.06.1993**

(54) **Visserie en matériau composite constitué d'une matrice céramique renforcée de fibres réfractaires**

Schraubsystem aus Verbundmaterial, dass aus einer mit feuerfesten Fibern verstärkten Keramikmatrix besteht

Composite screw system made of a refractory fibre reinforced ceramic matrix

(84) Etats contractants désignés:
**BE DE GB IT SE**

(30) Priorité: **17.06.1992 FR 9207684**

(43) Date de publication de la demande:
**22.12.1993 Bulletin 1993/51**

(73) Titulaire: **AEROSPATIALE Société Nationale Industrielle**
**75781 Paris Cédex 16 (FR)**

(72) Inventeurs:
• **His, Sylvie**
**F-33520 Bruges (FR)**

• **Lequertier, Jean-Michel**
**F-17620 Saint Jean d'Angle (FR)**

(74) Mandataire: **Thébault, Jean-Louis**
**Cabinet Thébault**
**111 cours du Médoc**
**33300 Bordeaux (FR)**

(56) Documents cités:
**EP-A- 0 399 548**          **FR-A- 2 586 246**
**FR-A- 2 610 921**          **US-A- 4 887 518**

• **NTIS TECH NOTES vol. M, no. 2301, Février 1991, SPRINGFIELD, VA US page 195 , XP000224787 'braided composite threaded fasteners'**

## Description

La présente invention a trait à une visserie en matériau composite constitué d'une matrice céramique renforcée de fibres réfractaires et, plus précisément, d'organes d'assemblage du type comprenant, d'une part, une tige filetée comportant ou non une tête et, d'autre part, un ou plusieurs écrous coopérant avec ladite tige, lesdits organes étant réalisés en une matière céramique obtenue par frittage sous charge d'une poudre réfractaire incorporant des filaments de renforcement sous forme de trichite ou "whiskers".

Parmi ces matériaux, l'invention vise plus particulièrement, bien que non exclusivement, les matériaux composites à matrice céramique constituée de SiAlON ou de $Si_3N_4$ et renforcée de trichites de carbure de silicium et/ou de nitrure de silicium, ces matériaux étant décrits respectivement dans les brevets français N° 2.586.246 et 2.610.921.

Ces matériaux céramiques armés présentent des caractéristiques intéressantes :

- renforcement quasi-isotrope,
- résistance naturelle à l'oxydation,
- température d'utilisation pouvant atteindre et dépasser 1200°C,
- bonnes propriétés thermo-mécaniques,
- bonne ténacité et bonne résistance aux chocs thermiques,
- bonne usinabilité en comparaison avec d'autres céramiques.

Du fait de leurs propriétés spécifiques, notamment la dureté et la résistance aux chocs thermiques et mécaniques, de tels matériaux sont principalement utilisés en tribologie chaude et peu exploités au niveau structural propre à cause de leur comportement élastique, ces matériaux ayant une grande raideur, et de leur fragilité.

Or, récemment s'est manifesté l'intérêt de réaliser des structures d'assemblage démontables susceptibles de résister à des températures élevées pouvant atteindre ou même dépasser 1200°C.

Dans un tel contexte, il est hors de question d'envisager de recourir à la visserie métallique qui ne tient pas à de telles températures. Par ailleurs, les matériaux composites céramiques du type ci-dessus ont des propriétés et particularités telles que la simple reproduction, en visserie céramique armée, des types de visserie métallique conventionnelle, en usage pour l'assemblage de structures soumises à de fortes sollicitations mécaniques en traction, flexion et cisaillement, ne donne pas satisfaction, la conjonction des difficultés d'usinage et de la fragilité des matériaux céramiques armés, notamment en ce qui concerne la tenue en traction, ne permettant pas d'obtenir une résistance à la rupture acceptable eu égard aux sollicitations mécaniques devant être affrontées.

La présente invention a précisément pour but de réaliser une visserie en matériau céramique armé apte à supporter de fortes contraintes mécaniques dans des conditions de température pouvant atteindre et dépasser 1200°C, voir NITS TECH NOTES, vol. M, no. 2301, Février 1991, Spring)field, VA US (cf. page 195, XP000224787 'braided composite threaded fasteners').

A cet effet, l'invention a pour objet une visserie conformément à la revendication 1.

De préférence, une telle visserie satisfait en outre à la condition suivante :

$$0,03 \leq r/_D \leq 0,07$$

dans laquelle r est le rayon de fond de filet et le rayon de crête et D est le diamètre extérieur de la tige filetée.

De préférence également, les filets ronds ont un angle $\alpha$ compris entre 30° et 100°.

Un tel profil de filets s'est avéré remarquablement adapté à la nature des matériaux céramiques armés concernés, en conférant aux organes d'assemblage réalisés dans ces matériaux une tenue en traction excellente et pouvant dépasser 200 MPa, notamment en utilisant comme matériau une céramique armée du type $SiC_W$/SiAlYON.

De même, des essais au cisaillement sur ces mêmes matériaux ont montré une tenue à la rupture supérieure à 160 MPa.

De telles visseries sont destinées notamment à l'assemblage de plaques, en particulier de plaques en carbonecarbone protégé ou non contre l'oxydation.

D'une manière générale, les visseries selon l'invention seront mises en oeuvre en réalisant des contacts entre, d'une part, la tête et/ou le ou les écrous et, d'autre part, l'ensemble des plaques à assembler, sous la forme de portées sphériques, pour des questions de tenue mécanique par élimination des flexions parasites néfastes et de fiabilité de l'assemblage.

Pour les écrous, ceci est obtenu en rendant sphérique l'une des faces de l'écrou et en interposant, entre l'ensemble des plaques et cet écrou, une pièce intermédiaire telle qu'une rondelle présentant une surface sphérique complémentaire de celle de l'écrou.

Pour la tête de la tige filetée, lorsqu'il s'agit d'une vis, la face interne de la tête autour du noyau est rendue sphérique en correspondance avec un lamage sphérique réalisé sur la plaque en regard au droit de l'alésage récepteur de la vis.

D'autres caractéristiques et avantages ressortiront de la description qui va suivre de modes de réalisation de visseries selon l'invention, description donnée à titre d'exemple uniquement et en regard des dessins annexés sur lesquels :

- Figure 1 représente schématiquement un mode d'assemblage de plaques par exemple en carbonecarbone protégé ou non contre l'oxydation, à l'aide d'un système à goujon et écrou selon l'invention ;

- Figure 2 représente une vis conforme à l'invention ;
- Figure 3 représente en coupe axiale un écrou selon l'invention ;
- Figure 4 représente en coupe axiale une rondelle à surface sphérique concave susceptible d'être associée à la vis de la figure 2 ou à l'écrou de la figure 3 ;
- Figure 5 est une coupe axiale d'un assemblage vis-écrou selon l'invention, et
- Figure 6 illustre en coupe axiale une variante de réalisation d'un ensemble écrou-rondelle selon l'invention, en position montée.

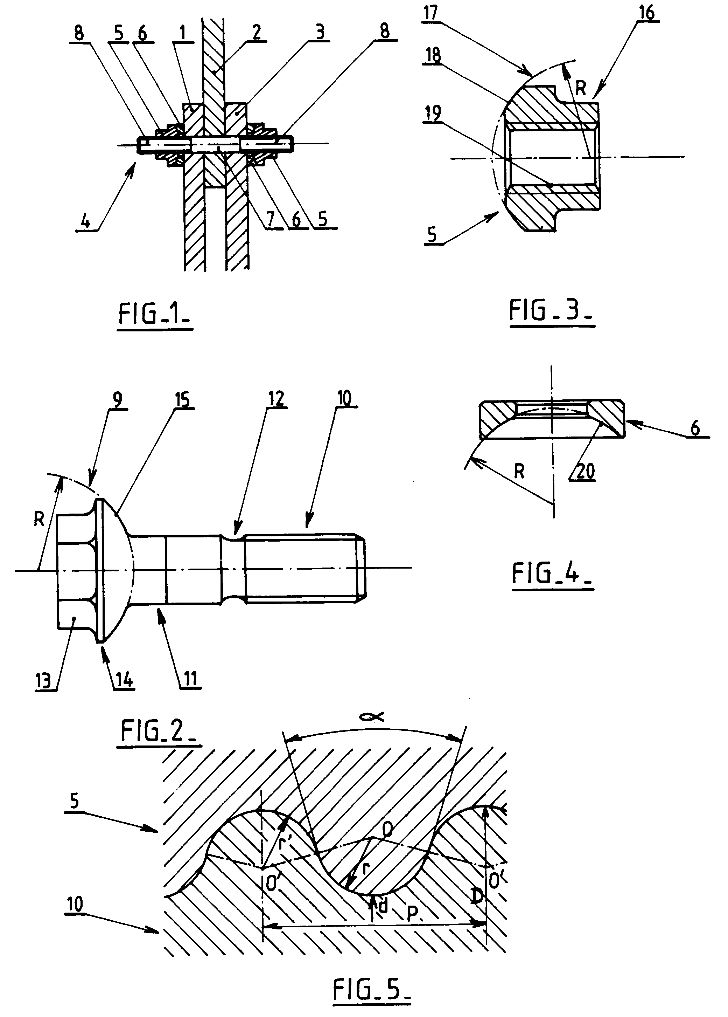

Sur la figure 1 on a représenté respectivement en 1,2 et 3, trois plaques, par exemple en carbone-carbone, empilées et maintenues assemblées à l'aide d'un goujon 4 traversant des alésages réalisés dans lesdites plaques, lesquelles sont pressées les unes contre les autres par deux écrous 5, une rondelle 6 étant interposée entre chaque écrou et la face en regard des plaques concernées.

Le goujon 4 comporte une partie centrale 7 lisse et deux parties d'extrémité 8 filetées.

La figure 2 illustre une autre visserie, du type vis, constituée d'une tige munie d'une tête 9, d'une partie filetée 10 à l'extrémité opposée à la tête, et d'un fût central lisse 11 séparé de la partie filetée 10 par une gorge annulaire 12.

La tête 9 comporte une partie externe de forme hexagonale 13 et une partie 14 de raccordement au fût central 11 présentant une face 15 tournée vers le centre de la vis de forme convexe sphérique, de rayon de courbure R, entourant ledit fût central 11.

La figure 3 représente plus en détail un écrou 5, lequel comprend une partie 16 de forme hexagonale et une partie cylindrique 17 dont la face d'extrémité 18 est de forme convexe sphérique, de rayon de courbure R. L'écrou 5 comporte un taraudage 19.

La figure 4 représente plus en détail une rondelle 6 dont une des faces 20 a une forme concave sphérique de rayon de courbure R.

Les pièces 5,6,7 et la vis de la figure 2 sont monobloc et réalisées en un matériau céramique armé obtenu par frittage sous charge d'une poudre réfractaire incorporant des filaments de renforcement sous forme de trichite ou "whiskers".

Plus particulièrement, bien que non exclusivement, l'invention s'applique à des matériaux des types $SiC_w$/SiAlON et $SiC_w$/$Si_3N_4$ décrits respectivement dans les brevets français N° 2.586.246 et 2.610.921.

Ces matériaux, ainsi que d'une manière générale les matériaux composites en céramique armée, présentent une très grande raideur et sont fragiles en ce sens qu'ils sont aptes à travailler efficacement essentiellement en compression, les efforts en traction engendrant un risque important d'amorce de rupture au droit d'un défaut de surface, de tels défauts provenant principalement de l'usinage et au droit d'un défaut à coeur, de tels défauts provenant d'inhomogénéités de mélange ou d'inclusions parasites.

Afin de pallier à ces inconvénients, en vue d'obtenir une visserie apte à l'assemblage démontable de pièces susceptibles de subir des températures élevées pouvant atteindre et dépasser 1200°C et capables de supporter des contraintes mécaniques élevées, l'invention propose d'employer les matériaux composites du type ci-dessus pour réaliser une visserie tout à fait spécifique, remarquable à la fois par sa nature et par les particularités de ses filetages.

Les filetages des organes d'assemblage selon l'invention, tels que ceux illustrés par les figures 1 à 3, tant mâles (8,10) que femelles (19), sont des filetages du type à filets ronds, dont le principe est en soi connu.

Les filets ronds sont principalement utilisés en visserie bois et relativement peu en visserie métallique où ils sont employés surtout pour constituer des liaisons entre pièces soumises à des chocs et non pas pour réaliser un assemblage statique.

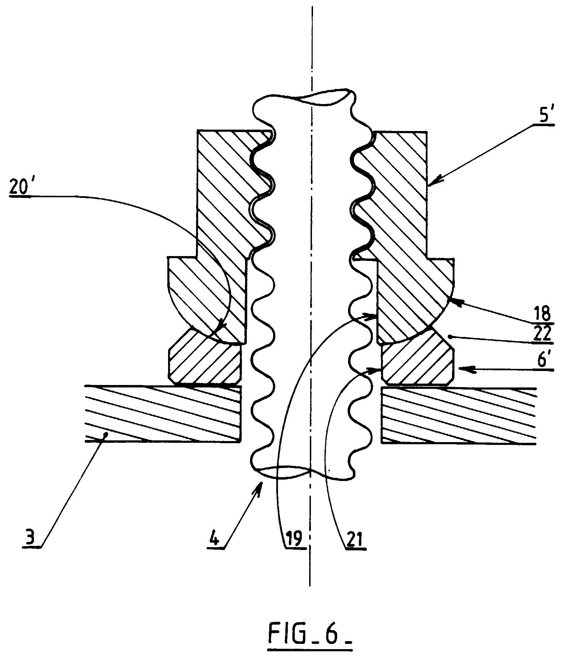

La figure 5 illustre le type de filets ronds utilisé conformément à l'invention.

Sur cette figure, les filets mâles et femelles, de la tige filetée 10 et d'un écrou 5 respectivement, ont le même profil théorique et occupent tout l'espace entre tige et écrou, les rayons r de fond de filet et r' de crête de filet étant presque identiques, la différence provenant des conditions d'usinage et de la nécessité d'un jeu fonctionnel minimal entre la tige et l'écrou pour le déplacement de l'écrou le long de la tige.

Le filetage rond ainsi représenté se caractérise par son pas P, lesdits rayons r,r', l'angle $\alpha$ déterminé par les tangentes aux points d'intersection des flancs des filets et des droites joignant les centres 0,0' des rayons r,r' des filets mâles et femelles. Par ailleurs, d désigne le diamètre en fond de filet de la tige filetée (10) et D désigne le diamètre extérieur de ladite tige.

A la suite de recherches, essais et calculs, il s'est avéré que les filets du type rond étaient remarquablement appropriés aux matériaux céramiques armés en question pour trois raisons fondamentales.

En premier lieu, les filets ronds respectent tout particulièrement la fragilité en traction desdits matériaux car ils convertissent l'essentiel des efforts en traction exercés sur la vis ou le goujon de l'assemblage en efforts de compression sur la matière des filets.

En second lieu, les filets ronds, par leurs formes douces, se prêtent à un usinage qui évite, ce qui est déterminant pour les matériaux de céramique armée, les amorces de rupture préjudiciables à la tenue en traction.

En troisième lieu, les filets ronds confèrent à la tige filetée, qu'il s'agisse d'un goujon 4 ou d'une vis (figure 2), un coefficient de surcontrainte locale en traction remarquablement faible permettant de dimensionner beaucoup plus efficacement la tige et notamment de réduire la section travaillante de la vis et d'optimiser ainsi la masse pour une résistance à la rupture donnée.

En effet, le coefficient de surcontrainte locale, ou facteur théorique de concentration de contraintes, dénommé $K_t$, se définit comme le rapport de la contrainte réelle maximale à fond d'entaille à la contrainte nominale maximale dans la section nette de la pièce entaillée. Ce paramètre $K_t$ dépend uniquement de la géométrie de la pièce et du type de sollicitation, dans la mesure où la pièce est constituée par un matériau homogène et continu.

Une pièce réalisée en un matériau présentant une zone plastique, c'est le cas par exemple des métaux, peut accepter des surcontraintes locales relativement importantes, à un niveau inférieur à la contrainte de rupture et même théoriquement à un niveau supérieur à la contrainte de rupture, en particulier en régime statique. Cette pièce peut ainsi, localement, lorsqu'elle atteint sa limite élastique, se plastifier et s'adapter.

Pour un matériau tel que les céramiques possédant une grande raideur, ce phénomène d'adaptation n'existe pas, car le matériau n'a pas de zone plastique.

Dès lors, la surcontrainte locale devient dimensionnante et peut engendrer la rupture.

Les inventeurs ont ainsi mis en évidence que la conjonction d'un filetage de type à filets ronds rapporté sur une pièce monobloc en matériau céramique armé conférait aux pièces d'assemblage ainsi constituées un coefficient $K_t$ remarquablement faible permettant d'adapter au mieux notamment la section travaillante des tiges filetées (vis ou goujon) en fonction des contraintes dimensionnelles, de masse et des sollicitations thermiques et mécaniques à affronter.

A titre d'exemple, on a reporté dans le tableau ci-après les paramètres (déterminés par le calcul et à partir de données de départ) d'une tige filetée réalisée conformément à l'invention avec un filet du type illustré par la figure 5 et pour un matériau constitué par du $SiC_W$/SiAlYON.

| D (mm) | 7,00 |
|---|---|
| d (mm) | 5,854 |
| $\alpha$ | 30° |
| r (mm) | 0,378 |
| P (mm) | 1,502 |
| $s = \pi\, d^2/4$ (mm$^2$) | 26,92 |
| r/D | 0,054 |
| d/D | 0,836 |
| $K_{tt}$ théorique | < 2,7 |
| $K_{ts}$ | < 1,27 |
| St/$K_{tt}$ | > 9,97 |
| $F_t$ | > 321 daN |

Dans ce tableau, S est la section travaillante, $K_{tt}$ et $K_{ts}$ sont les coefficients de concentration de contraintes en traction et en torsion respectivement et $F_t$ représente l'estimation de l'effort de tenue en traction, sur la base d'une contrainte à rupture $\sigma_t = 320$ MPa.

Des essais réalisés à partir des paramètres dimensionnels du tableau ci-dessus ont révélé qu'en fait les tiges filetées réalisées avaient une tenue à la rupture en traction effective s'étageant entre 400 et 500 daN, c'est-à-dire bien supérieure à la valeur estimée plancher de 321 figurant dans le tableau ci-dessus.

Des essais en cisaillement ont par ailleurs révélé une tenue à la rupture supérieure à 2500 daN.

Il est également à signaler que la mesure du coefficient de frottement statique, flanc sur flanc, pour le matériau $SiC_w$/SiAlYON a donné des valeurs comprises entre 0,22 et 0,26 suivant l'effort appliqué, ce qui écarte le risque d'obtenir une visserie non serrable.

Le matériau $SiC_w$/SiAlYON tient à une température de l'ordre de 1200°C.

En comparaison, le matériau $SiC_w$/$Si_3N_4$ résiste à une température pouvant atteindre 1400°C et présente, de surcroît, une résistance à la traction supérieure à celle du matériau $SiC_w$/SiAlYON.

De préférence, la visserie selon l'invention satisfait en outre à la condition suivante :

$$0,03 \leq r/_D \leq 0,07$$

dans laquelle r représente à la fois le rayon de fond de filet et le rayon de crête et D est le diamètre extérieur de la tige filetée.

Une telle condition permet d'obtenir un coefficient $K_t$ satisfaisant, inférieur à 3,5.

Pour des valeurs du rapport $r/_D$ supérieures à 0,07, on obtient certes des valeurs de $K_t$ encore plus faibles, mais correspondant à des valeurs du diamètre en fond de filet d de la tige filetée trop faibles et inutilisables. Pour des valeurs du rapport $r/_D$ inférieures à 0,03, on obtient par contre des valeurs de $K_t$ trop importantes.

Par ailleurs, l'angle $\alpha$ se situe préférentiellement dans la plage 30°-100°, étant entendu que plus l'angle $\alpha$ sera important, meilleure sera la tenue en traction de la tige filetée.

D'une manière générale, les visseries selon l'invention seront mises en oeuvre en réalisant des contacts entre les écrous 5 et les rondelles 6 par exemple, ou entre la tête de vis 14 et la plaque en regard à assembler, sous la forme de portées sphériques, de rayon de courbure approprié, pour éliminer les éventuelles flexions parasites néfastes, pour des questions de tenue mécanique et de fiabilité de l'assemblage.

Au niveau de l'association écrou-rondelle, il est apparu, au cours des essais, qu'un risque de rupture par décolletage de l'écrou pouvait éventuellement exister au droit de la portée sphérique, du fait que le contact ne peut se faire en réalité que sur une petite surface annulaire, à cause de l'extrême raideur du matériau et de l'impossibilité d'un usinage parfait. Pour remédier à cela, on peut réduire la surface des portées sphériques et la déplacer vers le centre de l'écrou et de la rondelle.

En outre, toujours dans le même souci d'améliorer encore la tenue à la rupture, on peut supprimer dans l'écrou les filets les plus proches de la face sphérique d'appui.

La figure 6 illustre une variante de réalisation d'un ensemble écrou-rondelle comportant les aménagements énoncés ci-dessus.

L'écrou 5' est muni, du côté de sa surface convexe sphérique 18, d'un évidement cylindrique 19 coaxial aux filets et éliminant de ce fait les deux ou trois filets les plus proches de ladite surface 18.

L'évidement central 21 de la rondelle 6' peut être ajusté au diamètre dudit évidement 19.

Enfin, la surface concave sphérique 20' de la rondelle 6' est sensiblement réduite en chanfreinant par exemple en conséquence le bord externe tourné vers l'écrou de la rondelle 6'.

Enfin, l'invention n'est évidemment pas limitée aux modes de réalisation représentés et décrits ci-dessus mais en couvre au contraire toutes les variantes, notamment en ce qui concerne la nature du matériau céramique armé, ainsi que les caractéristiques dimensionnelles des filetages et des portées sphériques, dans les éventuelles limites définies plus haut. Les surfaces sphériques d'appui peuvent bien entendu être inversées, les surfaces phériques des écrous étant par exemple concaves et celles des rondelles associées convexes.

**Revendications**

1. Visserie pour l'assemblage démontable de pièces susceptibles de subir des températures élevées et pouvant atteindre et dépasser 1200°C et capables de supporter des contraintes mécaniques élevées, ladite visserie comprenant, d'une part, une tige filetée (8, 10) comportant ou non une tête (9) et, d'autre part, un ou plusieurs écrous (5) coopérant avec ladite tige, caractérisé en ce que le matériau de la tige (8, 10) et du ou des écrous (5) est une matrice céramique incorporant des filaments de renforcement sous forme de trichite ou "whiskers" et en ce que les filets de ladite tige et desdits écrous sont des filets ronds, les parties mâles et femelles ayant le même profil théorique, à la tolérance d'usinage et au jeu fonctionnel près.

2. Visserie suivant la revendication 1, caractérisée en ce qu'elle satisfait, en outre, à la condition suivante :

$$0,03 \leq r/_D \leq 0,07$$

dans laquelle r est le rayon de fond de filet et le rayon de crête des filets et D est le diamètre extérieur de la tige filetée.

3. Visserie suivant la revendication 1 ou 2, caractérisée en ce qu'elle satisfait, en outre, à la condition suivante :

$$30° \leq \alpha \leq 100°$$

dans laquelle $\alpha$ est l'angle déterminé par les tangentes aux points d'intersection des flancs des filets et des droites joignant les centres de courbure des filets mâles et femelles.

4. Visserie suivant l'une des revendications 1 à 3, caractérisée en ce que le ou les écrous (5) présentent une surface d'appui sphérique (18).

5. Visserie suivant l'une des revendications 1 à 4, caractérisée en ce que la tige filetée est une vis dont la tête (9) est munie, côté fût (11), d'une surface sphérique d'appui (15).

6. Visserie suivant la revendication 4 ou 5, caractérisée en ce que lesdites surfaces sphériques d'appui (18,15) coopèrent avec des surfaces sphériques d'appui complémentaires (20) ménagées sur des pièces intermédiaires telles que des rondelles (6).

7. Visserie suivant la revendication 5, caractérisée en ce que la surface sphérique d'appui (15) de la vis coopère avec une surface sphérique d'appui complémentaire ménagée dans la face en regard de l'ensemble à assembler.

8. Visserie suivant l'une des revendications 1 à 7, caractérisée en ce que les premiers filets de l'une des extrémités du filetage de l'écrou (5') sont supprimés.

9. Visserie suivant l'une des revendications 6 à 8, caractérisée en ce que la portée sphérique entre écrou (5') et rondelle (6') est réduite et concentrée le plus près possible de l'axe de l'ensemble écrou-rondelle.

10. Visserie suivant l'une des revendications 1 à 9, caractérisée en ce qu'elle est réalisé en un matériau composite constitué d'une matrice céramique de type SiAlON ou SiAlYON ou $Si_3N_4$, renforcée de trichite de carbure de silicium ou de nitrure de silicium.

**Patentansprüche**

1. Schraubsystem zum lösbaren Verbinden von Teilen, die geeignet sind, Temperaturen auszuhalten, die erhöht sind und 1200°C erreichen oder überschreiten können, und in der Lage sind, erhöhte mechanische Beanspruchungen aufzunehmen, wobei besagtes Schraubsystem einerseits einen Gewindebolzen (8, 10), der gegebenenfalls einen Kopf (9) trägt, und andererseits eine oder mehrere, mit besagtem Eolzen zusammenwirkende Muttern (5) umfaßt, dadurch gekennzeichnet, daß das Material des Bolzens (8, 10) und der Mutter(n) (5) eine keramische Matrix ist, die Verstärkungsfibern in Form von Trichit oder Whiskers enthält, und daß die Gewinde besagten Bolzens und besagter Mutter(n) Rundgewinde sind, deren männliche und weibliche Teile das gleiche theoretische Profil bis auf die Formgebungstoleranz und das funktionelle Spiel besitzen.

2. Schraubsystem nach Anspruch 1, dadurch gekennzeichnet, daß es zudem folgende Bedingung erfüllt:

$$0{,}03 \leq r/D \leq 0{,}07,$$

wobei r der Boden- und der Scheitelbereichsradius des Gewindes und D der Ausßendurchmesser des Gewindebolzens ist.

3. Schraubsystem nach Anspruch 1 oder 2, dadurch gekennzeichnet, daß es zudem folgende Bedingung erfüllt:

$$30° \leq \alpha \leq 100°,$$

wobei $\alpha$ der Winkel ist, der durch die Tangenten an die Schnittpunkte der Flanken des Gewindes und die Punkte bestimmt wird, die die Krümmungsmittelpunkte von männlichen und weiblichen Gewinde verbinden.

4. Schraubsystem nach einem der Ansprüche 1 bis 3, dadurch gekennzeichnet, daß die Mutter(n) (5) eine sphärische Anlagefläche (18) aufweisen.

5. Schraubsystem nach einem der Ansprüche 1 bis 4, dadurch gekennzeichnet, daß cer Schraubbolzen eine Schraube ist, deren Kopf (9) schaftseitig mit einer sphärischen Abstützfläche (15) versehen ist.

6. Schraubsystem nach Anspruch 4 oder 5, dadurch gekennzeichnet, daß besagte sphärische Abstützflächen (18, 15) mit komplementären sphärischen Abstützflächen (20), die an Zwischenstücken wie Unterlegscheiben (6) angebracht sind, zusammenarbeiten.

7. Schraubsystem nach Anspruch 5, dadurch gekennzeichnet, daß die sphärische Abstützfläche (15) der Schraube mit einer komplementären sphärischen Abstützfläche zusammenarbeitet, die an der entsprechenden Seite der zu verbindenden Anordnung angebracht ist.

8. Schraubsystem nach einem der Ansprüche 1 bis 7, dadurch gekennzeichnet, daß die ersten Gewindegänge des einen Ende des Gewindes der Mutter (5') unterdrückt sind.

9. Schraubsystem nach einem der Ansprüche 6 bis 8, dadurch gekennzeichnet, daß die sphärische Tragfläche zwischen Mutter (5') und Unterlegscheibe (6') reduziert und so nah wie möglich auf die Achse der Einheit Mutter-Unterlegscheibe konzentriert ist.

10. Schraubsystem nach einem der Ansprüche 1 bis 9, dadurch gekennzeichnet, daß es aus einem Verbundmaterial realisiert ist, das aus einer keramischen Matrix des Typs SiAlON oder SiAlYON oder $Si_3N_4$ gebildet wird, die durch Trichit aus Siliciumcarbid oder Siliciumnitrid verstärkt ist.

**Claims**

1. Screw system for the disconnectable assembly of components liable to be subject to high temperatures which may achieve and exceed 1200°C and capable of withstanding high mechanical stresses, the said screw system comprising, on the one hand, a threaded rod (8, 10) which may or may not have a head (9) and, on the other hand, one or more nuts (5) cooperating with the said rod, characterised in that the material of the rod (8, 10) and of the nut or nuts (5) is a ceramic matrix incorporating reinforcing fibres in the form of whiskers, and in that the threads on the said rod and on the said nuts are round threads, the male and female parts having the same theoretical profile, to within the machining tolerance and functional clearance.

2. Screw system according to Claim 1, characterised in that it also satisfies the following condition:

$$0.03 \leq r/D \leq 0.07$$

in which r is the thread root radius and the thread land radius and D is the outside diameter of the threaded rod.

3. Screw system according to Claim 1 or 2, characterised in that it also satisfies the following condition:

$$30° \leq \alpha \leq 100°$$

in which $\alpha$ is the angle determined by the tangents to the points of intersection of the flanks of the threads and the straight lines joining the centres of curvature of the male and female threads.

4. Screw system according to one of Claims 1 to 3, characterised in that the nut or nuts (5) have a spherical bearing surface (18).

5. Screw system according to one of Claims 1 to 4, characterised in that the threaded rod is a screw whose head (9) is provided, on the same side as the shank (11), with a spherical bearing surface (15).

6. Screw system according to Claim 4 or 5, characterised in that the said spherical bearing surfaces (18, 15) cooperate with complementary spherical bearing surfaces (20) provided on intermediate parts such as washers (6).

7. Screw system according to Claim 5, characterised in that the spherical bearing surface (15) on the screw cooperates with a complementary spherical bearing surface provided in the opposite face of the assembly to be assembled.

8. Screw system according to one of Claims 1 to 7, characterised in that the first threads on one of the ends of the threading on the nut (5') are omitted.

9. Screw system according to one of Claims 6 to 8, characterised in that the spherical bearing surface between the nut (5') and the washer (6') is reduced and concentrated as close as possible to the axis of the nut/washer assembly.

10. Screw system according to one of Claims 1 to 9, characterised in that it is produced from a composite material consisting of a ceramic matrix of the SiAlON or SiAlYON or $Si_3N_4$ type, reinforced with silicon carbide or silicon nitride whiskers.

FIG.1.

FIG.3.

FIG.2.

FIG.4.

FIG.5.

20'

5'

18
22

6'

3

4    19    21

FIG_6_